# EUROPEAN PATENT APPLICATION

(11) **EP 3 530 110 A1**
(43) Date of publication of application: **28.08.2019**
(21) Application number: 17862564.6
(22) Date of filing: 17.10.2017
(51) Int. Cl.: A01K 1/015, A01N 25/08

(54) **SUBSTRATE FOR CONTROLLING FLIES AND OTHER INSECTS, PRODUCTION METHOD THEREOF AND USE OF THE SUBSTRATE AS AN ANIMAL BED**

(30) Priority: 21.10.2016 ES 201600885
(71) Applicant: Mateo Herrero, Maria Pilar, 46007 Valencia (ES)
(72) Inventor: Mateo Herrero, Maria Pilar, 46007 Valencia (ES)
(74) Representative: Balder IP Law, S.L.
(86) International application number: PCT/ES2017/070684
(87) International publication number: WO 2018/073472

(57) **Abstract**

The invention relates to a substrate, specially designed for use as an animal bed, for controlling insects, preferably flies, and which is characterised in that it comprises an absorbent substrate impregnated with at least one insect growth regulator (IGR) in a determined preferred concentration, wherein the substrate is preferably impregnated with a formulation comprising, in addition to the growth regulator, a filmogenic substance, a water-insoluble particulate mineral material, an organic solvent, one or more additives, and water, in the quantities specified in the description. The invention also relates to a method for obtaining the substrate, by impregnation with the formulation, and to the use of the substrate as an animal bed for insect control. Also disclosed is the use of the residue formed by the substrate mixed, with manure, after having been used as an animal bed, as an organic amendment for agricultural soils by means of a process of stabilisation and degradation by means of biosolarisation.

## Description

### TECHNICAL SECTOR

The present invention is comprised in the chemical sector, specifically in the area of insect control, preferably flies, at the livestock level. In particular, the present invention provides a substrate and method for controlling flies and other insects in animal beds and other environments where animals live such as stables, stalls, farms or zoos.

Additionally, the residues generated by using the substrate of the invention as an animal bed in stables, stalls, farms or zoos can be transformed by means of a process that degrades pesticides and subsequently be used as fertiliser and organic amendment for agricultural soils. Therefore, this invention is applicable in the field of Public Health, Agriculture and Animal Health.

### STATE OF THE ART

There are different species of flies, all of which are annoying for humans and animals and can affect their health since flies can mechanically transmit pathogenic microorganisms and parasites. In general, the life cycle of flies includes four stages: egg, larva, pupa and adult fly. Among the different existing species of flies, the housefly (*Musca domestica*) and the stable fly (*Stomoxys calcitrans*) are the most common, prolific and the most damaging in the livestock sector.

The housefly (*Musca domestica* L) can multiply very quickly, which may constitute a serious problem in those places where animals such as cattle, horses, etc., are bred or live. Flies generally deposit their eggs on decaying organic matter such as, for example, wet manure or spilled food. Taking into account that the housefly can multiply very quickly (for example, a pound of wet manure can give rise to more than 1500 larvae), and quickly (under optimum conditions its life cycle can be as short as 6 days), a large population of flies can be generated even in small areas of animal growth.

The stable fly (*Stomoxys calcitrans*) is a widespread livestock pest throughout the world. It is very common on farms for cattle (especially dairy and fattening), horses and pig pens, but they attack any warm-blooded animal (donkeys, mules, sheep, etc.), including man. They are found mostly on the legs, on the flanks and on the back of animals. Males and females suck blood 2 or 3 times a day, each time for about five minutes. When they are not sucking blood they usually rest outside the host, perched on the walls or objects near the hosts (poles, trees, barbed wire, fences). Each female lays about 500 to 1000 eggs on decomposing organic material, possibly of plant origin: bales of rotting straw, silage pits, horse or cow manure mixed with the materials used in animal beds, etc. and rarely in pure excrement. Their haematophagous activity is diurnal and of exophagous habits, that is to say, they bite outdoors, in the open air, typical in the vicinity of stables, although flies have been described as biting inside the rooms, normally related to fasting situations.

Besides these two species, flies of the genera *Sarcophaga, Lucilia, Calliphora* and *Musca,* being particularly problematic *Musca autumnalis* (face fly), in addition to other species located in certain geographical regions such as *Haematobia irritans,* very abundant in South America, can more often be found in livestock stables and farms.

As mentioned above, flies can transmit diseases and parasites between animals, as well as between animals and humans. In particular, house flies can harbour more than 100 different types of pathogenic organisms. There are studies that have associated them with more than 65 human and animal diseases. In addition, they can transport eggs and infective larvae of several parasitic worms. More specifically, flies can transmit viral diseases in cattle such as bovine viral diarrhoea (BVD), bovine herpesvirus (BHV-1) causing infectious bovine rhinitis (IBR) and bovine parainfluenza 3 (PI3). Bacterial diseases caused by flies include conjunctivitis, mastitis, bacterial diarrhoea, typhoid fever, anthrax, vibriosis and several Clostridial diseases. Flies can also transmit diseases between horses, for example, Pigeon fever or equine infectious anaemia, in addition to having a relevant role in the formation of summer sores.

A plague of flies can cause serious economic problems in livestock farms. In particular, flies can lead to a reduction in milk production, interfere with the work of operators, increase the frequency of diseases in livestock and, in relation to the foregoing, increase veterinary costs.

Similarly, plagues of flies can also entail serious economic damage in the equestrian sector, as they can affect the health of both horses and stall staff. High infestations of houseflies produce stress in horses that are very nervous and upset. In the case of the stable fly (*Stomoxys calcitrans* L.), in addition to the problems mentioned above, other problems may arise related to the fact that this fly species feeds on the blood of animals and humans. Therefore, an elevated population of this fly species can lead to weakening of the animals due to blood loss. Additionally, the bite of this species of flies is quite painful and, sometimes, can lead to allergic reactions, so a plague of this fly species can negatively affect other industries such as, for example, tourism. In addition, *Stomoxys calcitrans* can transmit various protozoa to horses such as *Trypanosoma evansi* and *Trypanosoma equinum, which* causes hip disease or surra.

Flies are also primary vectors of *Habronema* spp, a genus of gastrointestinal nematodes common in horses that cause a disease called cutaneous habronemiasis that causes ulcers in different parts of the animal. Since they visit many different hosts, they can also act as mechanical vectors of viral and bacterial diseases, e.g. foot-and-mouth disease virus.

On the other hand, there are other insects that proliferate in the materials used as animal beds, since these constitute an excellent shelter and refuge. This is the case of the bed beetle (*Alphitobius diaperinus*) which is usually present in breeding facilities for broilers (broiler chickens) or the presence of various species of fleas in sheep, goat or beef cattle stalls and stables.

Thus, in addition to the housefly, the habitat of the following species of insects is usually in animal environments and a presence in livestock facilities.

| SPECIES | CHARACTERISTICS |
|---|---|
| *Stomoxys calcitrans* | • It can transmit various protozoa to horses such as *Trypanosoma evansi* and *Trypanosoma equinum,* which causes hip disease or surra. |
| | • Primary Vectors of Habronema spp, a genus of gastrointestinal nematodes common in horses that cause a disease called cutaneous habronemiasis that causes ulcers in different parts of the animal. |
| | • They can also act as mechanical vectors of viral and bacterial diseases, e.g. foot-and-mouth disease virus |
| *Alphitobius diaperinus* | • They proliferate in the materials used as animal beds, especially in breeding facilities for broilers (broiler chickens) |
| Fleas | • Commonly present in livestock environments. |

To combat all these pests present in environments where animals are bred and /or live such as, for example, in livestock facilities, stalls, farms or zoos, a combination of different control systems is currently used. Generally, this system comprises environmental sanitation processes aimed at reducing breeding sites, i.e. removal of decomposing material where flies or other insects may develop (e.g., old forage, agricultural residues, hay, manure, spilled food)) and cleaning of the facilities; biological control using natural enemies of insects the plague of which is to be controlled; and/or chemical agents.

As chemical control agents, insecticides are often used in aerosol form, cold fogging (fine droplets) and spraying, devices for direct self-application to the animal (*pour-on* and *spot-on*), baits or traps. The application of insecticidal aerosols on surfaces where insects usually come to rest, in particular, flies, i.e. walls, poles, roofs or other structures, creates a toxic surface that allows reducing the population of insects in the environment where the animals are located, particularly stables and/or stalls. Another widely used alternative is to apply the insecticidal compound in the form of a mist, that is, very small drops that remain floating in the air for a short period of time. This treatment allows controlling the population of flying insects such as adult flies, since they come in contact with the insecticide while flying in the area where the treatment has been applied. In both cases it is necessary to protect the water and food of the animals, as well as the animals themselves, when applying the insecticidal composition.

It should be noted that the use of larvicidal products, mainly insect growth regulators (IGRs) such as diflubenzuron, novaluron, triflumuron and cyromazine, has become a common practice in livestock facilities. However, the in situ application by spraying or dusting of these active agents incorporated on the manure and the bed of the animals has the following drawbacks:
- Need to repeat treatments every time on the new manure or on the material of the animal bed which is replenished during the cleanings;
- Continuous handling of biocidal products by the keepers of the livestock facilities;
- Incomplete (and, therefore, inhomogeneous) coverage of the entire surface and volume of the animal bed, since it is generally applied only to areas where manure is present. Also, only the surface layer of the beds is treated, being less effective in the larvicidal action;
- The existence of untreated areas allows the development of larvae of other insects that do not live in manure, such as fleas; and
- Contribution of abundant moisture to manure and bed material due to spraying, which entails greater proclivity for oviposition by flies and proliferation of fungi in animal beds.

Fly larvae can also be eliminated by incorporating an insecticide into animal feed. The incorporation into drinking water has been less satisfactory due to the irregular amounts consumed by the animals and the difficulty of maintaining the appropriate dose per animal. These methods often result in problems with residues in animal tissues or products.

Finally, the methods of biological control, consisting of the use of predators and parasitoids (mites and predatory beetles of eggs and larvae of flies and hymenoptera parasitoids) show their best results with dry manure. In very wet manure, predators cannot move effectively to find and devour the eggs and larvae of flies. Regarding the use of entomopathogenic fungi, their efficacy against flies has been proven, but most species are only active on adults. Some species, such as *Beauveria bassiana,* have a broad spectrum of activity (for example, that can infect many insect species), while others are more selective (for example, *Metarhizium anisopliae* and *Paecilomyces fumosoroseus,* which are more effective against the face fly face and the horn fly).

The use of conventional insecticides to control plagues of flies, as well as other insects, presents several drawbacks. Among them, it should be noted that flies quickly generate resistance from the insecticides used, so should these chemical agents be chosen, it is necessary to alternate or rotate between different classes of insecticides. In addition, there are currently new regulations that require a reduction in the levels of insecticides present in food and in the levels to which humans and animals are exposed. Although the methods that comprise using insecticides in the form of traps, aerosols or fog allow reducing the number of adult flies, the results obtained are limited, since it is not possible to keep the number of flies at acceptable levels for a long time. Consequently, an improved method is required for controlling flies that prevents the development of flies in those places where animals are bred and/or live, in particular, livestock, horses or confined wild animals.
for controlling plagues of flies or other insects in environments where animals are bred and/or live, proper choice of the material making up the animal bed can be helpful. Thus, for example, the use of wood shavings as an absorbent substrate instead of hay or straw is preferred, since the latter absorb urine and decompose rapidly, converting the animal bed into a suitable place for the development of insects, particularly flies. To avoid this, in the case of using hay or straw as an absorbent material or substrate to form the animal bed, it is necessary to remove the material used more frequently than if wood shavings are used.

The proper choice of material or substrate that forms an animal bed is relevant to ensure that the animal is in a comfortable and healthy environment. Among the multiple functions of this material is the absorption of urine and gases, as well as the reduction of the growth of bacteria. Absorbent substrates that can be used as animal beds are wood shavings, wood pellets, peat, hay or straw, newspaper strips or alternative materials such as, for example, rice husks, wheat by-products, etc. All these materials, once contaminated with urine, manure or any other type of waste generated by the animal, are easy to remove from the stables and/or stalls, so that the animal can be kept in a healthy environment.

Currently, part of the residues generated by removing the part contaminated by faeces from animal beds, in particular from stables, stalls or farms, can be used as organic fertilizer in crop fields, for example, in sugarcane fields. However, until now, these residues were not subjected to any previous treatment to eliminate bacteria that may be present in the excrements contained in the absorbent substrate, nor have insecticides that may have been deposited on the beds after treatment as a spray or fog, or even larvicides applied directly to the soil, bed and/or manure in situ, to control plagues of flies and other insects in the environment of the animals, been eliminated. Therefore, the direct application of these residues as fertilizers can cause public health problems and/or environmental contamination.

The presence of pesticides in soils is an environmental problem for different environmental compartments such as surface water runoff, groundwater by leaching and air emissions due to volatilization. Additionally, these substances may affect soil microorganisms, beneficial insects and generate harmful effects on plants. The majority contribution of these substances to the soil comes from the application of phytosanitary products by farmers when it comes to combating pests and diseases in agricultural crops.

The dynamics of phytosanitary products in the soil is governed by various physical, chemical and microbiological processes. In particular, processes of adsorption/desorption, leaching, chemical and microbiological degradation, absorption by the plant, volatilization, rain, climatic factors (humidity and temperature), solar radiation and the content of organic matter.

### DESCRIPTION OF THE INVENTION

The present invention provides a substrate, specially designed to be used as an animal bed, which allows controlling the biological cycle of insects, preferably flies, preventing them from passing into adulthood and, consequently, allows controlling plagues of these insects in the environment where animals are bred and/or live, in particular, in stables, stalls, farms or zoos; as well as in places where the residues regenerated by these animals is stored.

More specifically, the present invention relates to a substrate for controlling insects, preferably flies, characterized in that it comprises an absorbent substrate impregnated with at least one insect growth regulator (IGR). This substrate is, therefore, a material treated with said growth regulator. It may be considered indistinct within the scope of the present specification to use the term "treated material or substrate" and "impregnated material or substrate", since the former conforms to a better extent to the names of the regulatory framework on biocides, while the latter is a term technically more accepted and used to refer more directly to the way in which the product is treated (impregnated) with the regulator.

Thus, in the substrate for controlling insects, preferably flies, which are described herein, one or several insect growth regulators (IGR) are distributed homogeneously on the surface of the absorbent substrate. In this way, the use of the substrate of the present invention as animal bed absorbent material allows achieving a high, controlled and reproducible effectiveness in the control of plagues of insects, preferably flies, in facilities where animals are bred and/or live such as stalls, farms, stables or zoos, thus solving the problems detected in the technical field derived from applying in situ these active agents directly on the manure and bed of the animals.

In the present invention, the absorbent substrate can be selected from those known as absorbent material for animal beds. Preferably, the absorbent substrate comprised in the substrate for controlling insects, preferably flies, of the present invention (and which is impregnated with the formulation) is selected from the group consisting of wood shavings, straw, wood pellets, paper, hemp, flax, shredded cardboard and a combination of the foregoing. More preferably, the substrate is made up of wood shavings, in particular pine or spruce. The shavings are inedible, widely available and sold in sacks and in bulk.

The substrate for controlling insects, preferably flies, described herein incorporates at least one insect growth regulator (IGR), also known in the industry as "IGR". IGRs are natural or synthetic products, very similar in structure to certain hormones that regulate the growth of arthropods. Its effect is to interfere in the development of larvae, preventing individuals from completing their reproductive cycle. Because they are substances similar to those of the arthropod itself, they cannot cause resistance phenomena.

Two main types of IGRs can be highlighted.

A first type is made up of inhibitors of chitin synthesis. These compounds interfere in the formation of chitin in moulting periods. As a result, they prevent normal growth since the structure of the exoskeleton cannot be restored correctly after moulting, which causes malformations. The most commonly used inhibitors of chitin synthesis are diflubenzuron, triflumuron, lufenuron, hexaflumuron, hexaflumuron, novaluron, chlorfluazuron, lufenuron, teflubenzuron and cyromazine. This type of insecticide is effective mainly when it is applied in the first larval stages (L1, L2). Most are synthetic products, but there is one of plant origin such as plumbagin, obtained from the roots of *Plumbago capensis,* which inhibits chitin synthetase, and its effect on different lepidoptera pests has been proven. Among the ICRs that are inhibitors of chitin synthesis, a preferred case is that of cyromazine, which belongs to the group of triazine derivatives and acts by interfering with the metabolism of insect chitin. Cyromazine is quite specific for dipterous larvae (muscidae, calliphoridae, mosquitoes, fleas and some coleoptera, among others), which may be an advantage because it does not harm many species of insects and other beneficial organisms such as parasites and predators of other plagues of insects. In addition, this fact is compounded by the very low toxicological profile of cyromazine, even used as a feed additive in animal feed.

A second type of IGR is made up of the juvenile hormone and moulting hormone analogues and antagonists. These compounds modify the levels of juvenile hormone and moulting hormone, hindering the development of the insect and the transition to the adult stage, whereby the insect ends up dying without actually reproducing. Thus, juvenile hormone analogues, or juvenoids, prevent insect metamorphosis because they inhibit the differentiation of adult characters and therefore prolong the larval state, affecting fecundity. They can be substances produced by the insects themselves or by artificial synthesis that induce moulting, causing the appearance of nonviable individuals, with intermediate characteristics of larva and pupa; inhibition of feeding that leads to a decrease in reproductive potential and other physiological alterations. Additionally, juvenile hormone analogues, also referred to as JH analogues, may have an ovicidal effect.

Preferred JH analogues can be selected from the group consisting of pyriproxyfen, methoprene, fenoxycarb and a combination of the foregoing.

It should be added that there is a third group of compounds whose mechanism of action is also to affect an insect hormone, specifically ecdysone or moulting hormone. These compounds are considered here as another type of IGR because they act as growth regulators, ecdysone antagonists, and are quite specific against Lepidoptera. They do not raise the contents of ecdysone, like benzoylphenylureas, but act directly on the tissues; that is, they force a premature synthesis of the cuticle before the insect is, by its development, ready to moult. It is an original mode of action based on a mimetic action of the moulting hormone: 20-hydroxy-ecdysone. This activity completely differentiates it from insect growth regulators and inhibitors: it sets the moulting process in motion when the insect is in the larva stage, stages L1-L4, but is not physiologically prepared for it, thus causing the death of the larvae in the double head capsule stage. The treated larvae stop feeding quickly after ingestion, after 2-4 hours, which stops the production of damage. Its ovicidal action is low, in general, but variable with the species; in addition, the application of the product causes a decrease in the fecundity of adults, altering their reproductive capacity. The preferred ecdysteroids are: tebufenozide, methoxyfenozide, halfenozide or a combination of the foregoing.

The insect growth regulator (IGR) present in the substrate for controlling insects, preferably flies, which is described herein prevents the normal development thereof from eggs placed in the excrements of animals resulting from close contact between substrate and the faeces of the animals deposited in the beds. Preferably, of all the types discussed above that are valid for the present invention, the insect growth regulator is selected from the group consisting of pyriproxyfen, methoprene, hydroprene, diflubenzuron, triflumuron, fenoxycarb, tebufenozide, methoxyfenozide, cyromazine and a combination of the foregoing. Even more preferably, the IGR is pyriproxyfen, due to its efficacy at very low doses, low mammalian toxicity and high degradation rate in soils. Another insect growth regulator preferred due to its properties and behaviour in the present invention is cyromazine.

Pyriproxyfen is a broad spectrum insect growth regulator, with activity against plagues of insects such as houseflies, mosquitoes and cockroaches. ICRs are insect specific and have a very low mammalian toxicity. Pyriproxyfen is one of four pesticides (together with temephos, methoprene and permethrin) recommended by the World Health Organization for the treatment of drinking water against mosquito plagues.

As mentioned above, flies and other insects usually lay their eggs in decomposing organic material such as, for example, the manure deposited on animal beds in stables and/or stalls. Currently, the substrate used as an animal bed in stables and/or stalls, preferably wood shavings, is periodically removed for replacement and stored prior to its removal and reuse as organic fertiliser. During all this time the eggs deposited in the manure hatch and generate the annoying plagues of other insects.

Against these drawbacks, with the production of the treated absorbent substrate used in animal beds, by impregnation of the IGR, the development of fly eggs present in the manure is affected, being able to reach, particularly when pyriproxyfen is used as IGR, 100% efficacy in preventing the fly from developing beyond the juvenile stages (larva and pupa), preventing the appearance of the adult insect. As mentioned, this effect is not achieved when the active agent is applied by spraying or the like on a substrate in situ, for the reasons stated in the previous section (lack of homogeneity in the application, appearance of untreated areas, etc.).

In preferred embodiments of the present invention, the concentration of insect growth regulator, preferably pyriproxyfen, impregnated in the absorbent substrate is between 1 mg/kg and 6000 mg/kg, amounts expressed by weight of IGR with respect to the weight of the absorbent substrate. This amount is equivalent to 0.0001-0.6% by weight with respect to the final weight of the substrate, and it should be understood that these values express the concentration of the active ingredient in the absorbent substrate, which may be referred to as the IGR "load" in the substrate. Most preferably, the concentration of the insect growth regulator impregnated in the absorbent substrate is between 1 mg/kg and 500 mg/kg. Even more preferably, the amount of IGR by weight with respect to the final weight of the substrate is 0.0015%.

It is indicated herein with respect to this range of values as well as of any that is disclosed herein, that the minimum and maximum values described are included as part of the invention.

In preferred embodiments of the present invention, the absorbent substrate is impregnated with a formulation comprising, amounts expressed by weight with respect to the total weight of the formulation:
- between 0.005 and 10% of at least one insect growth regulator (IGR);
- between 0 and 5% of at least one filmogenic substance;
- between 0 and 15% of at least one water-insoluble particulate mineral material;
- between 0 and 25% of an organic solvent;
- between 0.01 and 10% of at least one additive selected from the group consisting of emulsifier, thickener, pH regulating agent, antifoam, dispersant, preservative, fungicide and a combination of the foregoing; and
- necessary amount of water to complete 100% by weight of the formulation.

In particular embodiments of the present invention, the qualitative and quantitative composition of the ingredients of the formulation impregnated in the absorbent substrate correspond to the composition of the formulation comprising the IGR used to produce the substrate of the invention, although it is possible that the content of water and, possibly, other volatile ingredients such as solvents, has decreased, either during the application of a possible drying step in the method of producing the substrate of the present invention, or by the action of ambient air or heat during use.

Preferably, at least one insect growth regulator (IGR) is comprised in the formulation in an amount by weight with respect to the total weight of the formulation comprised between 0.001% and 10%, this amount being 0.05% in the most preferred case when the IGR is pyriproxyfen. Logically, this value varies and depends on the nature of the IGR that has been incorporated. Thus, in the also preferred case of cyromazine, the preferred concentration would be comprised between 0.05% and 5% and would more preferably be 0.5%.

Preferably, the filmogenic substance can be comprised between 0.1% and 2% by weight with respect to the total weight of the formulation. This filmogenic substance comprised in the formulation impregnated in the substrate described herein can be, for example, vinyl acetate homopolymers, acrylic acid homopolymers, or copolymers formed by the following monomers: vinyl acetate, acrylic acid, styrene, vinyl versatate, ethylene, vinyl chloride and butadiene, among others; they can also be thermoplastic polyurethanes; natural or modified cellulose; natural or synthetic filmogenic resins such as turpentine, rosin, or alkyd resins. Preferably, the filmogenic substance is a vinyl copolymer.

Additionally, the formulation comprising the ICR may comprise a water-insoluble particulate mineral material, such as talc, kaolin, calcium carbonate, barite, calcium sulphate, bentonite, sepiolite, among others. Preferably, this formulation comprises calcium carbonate. Preferably, this component is present in the formulation in a percentage by weight with respect to the total weight of the formulation of 0.1% -5%.

In turn, the organic solvent may preferably be comprised in a percentage by weight with respect to the total weight of the formulation of between 0.1% and 5%. The solvents which can preferably be used in the present invention belong to the groups of hydrocarbons, alcohols, esters, ethers, ketones, amines, aliphatic or aromatic amides.

In preferred embodiments of the present invention, the formulation comprising at least one IGR may additionally comprise one or more of the following additives, in a % by weight of the total formulation:
- emulsifying agent, preferably being a calcium salt of alkyl benzene sulphonic acid, between 0.1 and 10%;
- thickener, preferably being a cellulose compound, between 0.1 and 2%;
- pH regulator, preferably being acetic-acetate buffer, between 0.1 and 1%;
- antifoam, preferably being selected from mineral oils, between 0.1 and 2%;
- dispersant, preferably being a polyacrylic acid derivative, between 0.1 and 5%;
- preservative, preferably being an isothiazolone, between 0.1 and 1%; and/or
- fungicide, preferably being tebuconazole, between 0.1 and 1%.

These additives can act as stabilisers of the formulation, both prior to its application by impregnation in the absorbent substrate and once it has been impregnated in the absorbent substrate, which means that these additives maintain the stability of the formulation when it is impregnated in the absorbent substrate.

Additionally, the present patent application refers to a method for obtaining the substrate for controlling insects, preferably flies, which is described herein, characterized in that the method comprises: applying (homogeneously by impregnation) on an absorbent substrate a formulation comprising, amounts expressed in percentage by weight with respect to the total weight of the formulation:
- between 0.005 and 10% of at least one insect growth regulator (IGR);
- between 0 and 5% of at least one filmogenic substance;
- between 0 and 15% of at least one water-insoluble particulate mineral material;
- between 0 and 25% of an organic solvent;
- between 0.01 and 10% of at least one additive selected from the group consisting of emulsifier, thickener, pH regulating agent, antifoam, dispersant, preservative, fungicide and a combination of the foregoing; and
- necessary amount of water to complete 100% by weight of the formulation.

It is evident from the above description that in the essential method a formulation as described above is applied in any of its variants, and that it is impregnated as desired to be maintained in the final substrate.

However, in another alternative of the method, this formulation that is impregnated can be in the form of a concentrated raw material, which facilitates its storage, packaging, distribution and commercialization, in such a way that in this particular case the method can include a previous step of diluting the concentrated formulation in water to reach the dose of use, that is, to be ready for use in the impregnation. In this case, the method may include a step of diluting in water a concentrated formulation comprising the following components by weight of the total formulation:
- between 1 and 50% of at least one insect growth regulator (IGR);
- between 0 and 25 % of at least one filmogenic substance;
- between 0 and 50 % of at least one water-insoluble particulate mineral material;
- between 0 and 95% of an organic solvent;
- between 0.01 and 10% of at least one additive selected from the group consisting of emulsifier, thickener, pH regulating agent, antifoam, dispersant, preservative, fungicide and a combination of the foregoing, and
- water to complete 100% by weight of the formulation, where this amount may be equal to zero,
before applying said formulation on the substrate homogeneously by impregnation.

Thus, it is clarified here that the formulation containing the IGR and which is impregnated in the substrate is aqueous, and in some cases instead of being ready for use, it can be in a concentrated format. The concentrated version, with a concentration of IGR between 1% and 50%, requires dilution in water prior to use, for which a stirred tank can be used. Alternatively, the concentrated product can be dosed in a stream of water under controlled flow conditions and the dilution performed in line for direct application and without the need for tank dilution.

It should be observed on the basis of the data provided above that there is an overlap of values between the concentration range of the IGR in the ready-to-use formulation and in the concentrated formulation, namely between 1% and 10%. This is due to the different effective dose of each of the IGRs discussed here and that can be part of the invention. In this way, it is evident that an ICR with a percentage by weight determined in the ready-to-use formulation will always have a higher concentration in the concentrated formulation, and in turn this concentration can be in a high or low proportion with respect to that of another ICR. Thus, it can be said that between 1% and 10% by weight of IGR the formulation can be directly impregnated on the substrate or diluted, depending on the IGR it contains.

In a preferred case, the concentration of IGR in the ready-to-use formulation is between 0.005% and 1% by weight of the total formulation, including both limits, when the IGR is pyriproxyfen and the amount of this IGR in the concentrated formulation is preferably between 1% and 10%.

In preferred embodiments of the present invention, the formulation comprising the IGR can be applied to the absorbent substrate, preferably wood shavings, in one of the following doses:
▪ Dosage of ready-to-use formulation: 2-10% by weight on weight of absorbent substrate.
▪ Dilution of the concentrated formulation: dilution of 0.5-20% with water and subsequent application on the material in doses of 2-10% on weight of absorbent substrate.
▪ Concentration of the IGR in the ready-to-use formulation: 0.005-10%, preferably between 0.01% and 2%;
▪ Concentration of the IGR in the concentrated formula: 1-50%, preferably between 5% and 25%;
▪ Concentration of IGR in the shaving: 1-6000 mg/kg or 0.0001-0.6%, preferably between 1 mg/kg and 500 mg/kg.

At this point, it should be noted that if the formulation to be impregnated comprises pyriproxyfen as IGR, then in the most preferred form said IGR is contained in the formulation in a percentage by weight with respect to the weight of the formulation comprised between 0.01% and 0.1%, more preferably being 0.05%. Also, preferably the dose of application of said formulation on the substrate is 15 mg/kg of substrate (preferably being wood shavings). In the case of cyromazine, its concentration in impregnation solution is preferably 0.5% and with a load of 150 mg/kg of substrate.

The substrate impregnated with IGR which is described in this patent application is particularly suitable for use as a component of the beds of horses and other animals, for which it must have a low moisture content level that allows its absorption function and, on the other hand, its function in the control of immature stages of flies in manure; "low" should be understood herein as a moisture content level comprised between 8% and 12%, never exceeding this value. Therefore, the amount of formulation (dose) used for impregnation is a parameter as important as the concentration in IGR (preferably pyriproxyfen or cyromazine) thereof, since at lower doses, the lower the moisture content of the final product.

The application of the formulation to the absorbent substrate can be carried out by one of the techniques selected from the group consisting of sprinkling, spraying, fogging or contact with a surface impregnated with the formulation. Preferably, in the method of the present invention the formulation is applied by spraying.

More specifically, the impregnation of the absorbent substrate, in particular wood shavings, can be carried out by various means or combinations thereof. In particular, it can be done by one of the following methods:
- Spraying of the formulation comprising the IGR through diffuser nozzles with variable drop size between 1 and 200 microns with the help of a pump;
- Fogging of the formulation comprising the IGR by action of pressurized air or pumping;
- Contact with applicator roller bathed with the formulation comprising the IGR.

For this, the impregnation system can be based on the advance and movement of the absorbent substrate through various means or combination thereof simultaneously to the application of the formulation comprising the IGR, preferably pyriproxyfen:
- Drop of the absorbent substrate by gravity through a conduit with or without the action of deflectors that divide the flow in the form of a curtain into two or more fractions;
- Advance by an inclined plane through a fluidized bed that moves the absorbent substrate by pneumatic action;
- Advance by inclined vibratory table; and/or
- Advance by inclined trommel with rotation and turning of the absorbent substrate; this system is preferred because of the suitability for the transport of the material and the continuous movement thereof, causing its separation and change of face as a result of turning.

In the substrate for controlling insects, preferably flies, which is obtained by the method described in this patent application, the IGR is distributed homogeneously, such that the active ingredient is conveniently distributed on the surface of the substrate.

In the production method described herein, when the substrate impregnated with the formulation comprising the insect growth regulator has a moisture content greater than 12%, the method comprises an additional step of drying the impregnated absorbent substrate to a value of maximum moisture content of 12%, that is to say that it does not exceed 12%, and that it is preferably between 8% and 12%.

The drying of the impregnated material (substrate) can be carried out by various means or combinations thereof. In particular, one of these means or a combination thereof can be used:
- Convective drying by hot air flow from a burner or an air heating system by other means. Alternatively, air can be used at room temperature (i.e. between 20 and 30°C) if the drying needs are lower. This system is preferred for the economy and simplicity of its industrial execution as well as for the use of lower temperatures than the radiant ones, so that degradation of the material is prevented;
- Radiant drying by means of infrared burners, electric resistors or infrared radiation.

In order to obtain greater homogenisation in the impregnation of the IGR in the absorbent substrate, preferably wood shavings, one of the following systems or a combination thereof may be used:
- Suspension of the absorbent substrate by pneumatic action in a chamber with the formulation comprising the IGR sprayed in fine drops. Additionally, the movement can be helped by the eccentric vibration of the transport table;
- Drop of the absorbent substrate from a height through a conduit with the presence of deflectors to divide the flow and spray the formulation comprising at least one IGR from several points;
- Agitation and advance of the absorbent substrate with an auger inside a chamber and sequential spraying of the formulation along same;
- Turning of the absorbent substrate with combs on a conveyor belt surface and sequential spraying of the formulation along same;
- Turning of the absorbent substrate by rotation and advance of the material inside a cylinder. This system is considered preferred because of the disintegration effect and turnover rate it achieves.

In other preferred embodiments, the absorbent substrate is wood shavings, and the method of producing the substrate for controlling insects also comprises the production of these shavings. In general, the production method for producing wood shavings can comprise the following steps:
a) cutting or superficial shaving of logs of wood, preferably pine or spruce, to form wood flakes with thicknesses comprised between 0.5 and 2 mm;
b) drying, for example in hot air dryers, to reduce the moisture content, preferably up to a maximum moisture content of 12% by weight with respect to the total weight of shavings;
c) purification to remove dust and fine particles; Y
d) packaging, for example, in sacks or in bulk.

The purification of step c) can be carried out, for example, through a cyclone and sieve. The fine particles separated in this step can be used as fuel in biomass burners that feed hot air to the dryer in step b) of drying the flakes.

Alternatively, this process of obtaining the shavings can be reduced to cutting the wood and packaging, in the case of lower quality products.

In preferred embodiments, wood shavings, preferably pine or spruce, used to obtain the substrate for controlling insects, preferably flies, described in this patent application have a moisture content between 8% and 12% by weight with respect to the total weight of shavings.

In the substrate for controlling insects, preferably flies, which is described herein, the IGR can be fixed to the shavings in any step of the production method for producing the shavings, preferably after purification by sieving. In this way only the final absorbent substrate is treated and the generation of atmospheric emissions during the combustion of impurities (dust and fine particles), which would occur in the event that the formulation is applied to the shavings before the purification steps, is prevented.

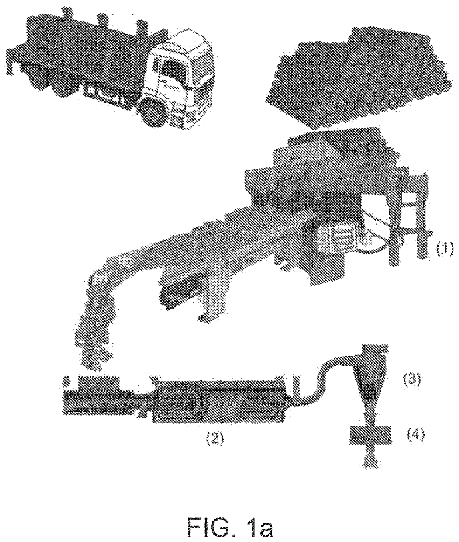

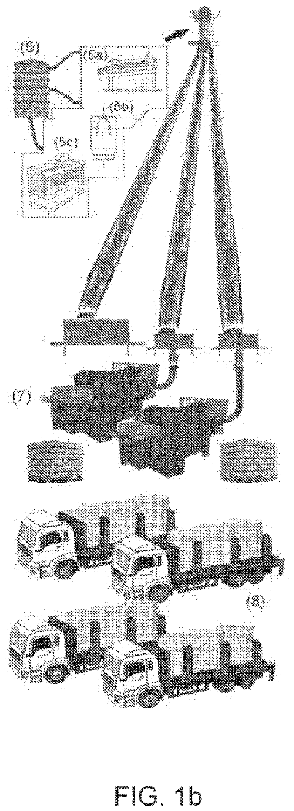

The impregnation operation is preferably carried out in line with the normal production of the wood shaving, by inserting an impregnation unit in the process (see Figure 1), although it can also be carried out in a manner that is isolated from the production method using already finished shaving. The inclusion of this step in the production line itself offers advantages in terms of process and the operating simplicity.

The present invention also relates to the substrate for controlling insects, preferably flies, obtained by the production method described in this patent application. This substrate has a particularly homogeneous distribution of both the IGR and other components that may be present in the impregnation formulation, so they are particularly advantageous when using them to control plagues of insects, preferably flies, in environments where animals live or are bred.

Additionally, the present invention refers to the use of the substrate for controlling insects, preferably flies, which is described herein as animal beds. In particular, for species such as equines, cattle, sheep, pigs, goats and other confined wild animals, preferably equines. Preferably, the substrate for controlling flies of the present invention is used as animal bed in stalls and stables.

This treatment of the substrate used in animal beds prevents the normal development of flies and other insects from the eggs that are deposited in the excrements of the animals present in the beds.

Additionally, the present invention relates to beds for animals formed by the substrate for controlling flies and other insects described herein. Preferably, when the substrate comprises wood shavings impregnated with pyriproxyfen, the latter is present in a concentration comprised between 1 and 100 mg/kg, and is homogeneously and uniformly distributed in the wood shavings.

The present invention also relates to a method for obtaining beds for animals that comprises depositing the substrate for controlling flies and other insects that is described in this patent application in the place where the animal is located, preferably in stalls, stables and farms. In preferred embodiments of the present invention, this method also comprises the production of the substrate, in particular that substrate comprising wood shavings and pyriproxyfen, as described herein.

In recent years, several techniques have been developed for the decontamination of soils contaminated from the degrading effect of microorganisms on contaminants. Within these techniques of bioremediation of soils contaminated by phytosanitary products, solarisation and biosolarisation stand out, since an acceleration of the degradation of these compounds in the soil is achieved in most cases (Solarization enhancement dissipation of carbendazim (MBC) in soil, Yarden et al., Soil Biology and Biochemistry. 21(1989) 857-861).

Soil solarisation was first described as a method to disinfect soils against a wide variety of fungi, nematodes, parasitic phanerogams (weeds) or arthropod pests, bacterial diseases, disease complexes, microorganisms associated with a state of weakness and other harmful biotic or abiotic agents. As a consequence of all this, the application of the technique of solarisation in agricultural land allows increasing the harvest and improves the quality of the crops.

However, the solarisation process for soil disinfection involves several problems, in particular, there is a temperature gradient between the treatment centre (higher temperature) and the outer part of the covered surface margin (normal temperature) which means that from one meter from the edge to the limit, the temperature decreases progressively. In this marginal zone there is a loss of efficacy that should be avoided. The escape of gases from the edges can also cause a lack of efficacy.

The contribution of manure or remains of brassicas (agricultural residues) to improve the solarisation process for soil disinfection has also been described. In this technique, called biosolarisation, the volatile substances produced in the biodecomposition of organic matter have an effect on the control of plant pathogens. Finally, the increase of the amount of organic matter in the soil that the biosolarised manure contributes to the agricultural soil translates into an increase in its fertility, improvement of its structure and reduction of salinity problems.

The results show that the use of organic amendments in biosolarisation allows further accelerating the degradation processes in the soil of the insecticides pirimicarb and pyriproxyfen (Rate of loss of insecticides during soil solarization and soil biosolarization. José Fenoll, Encarnación Ruiz, Pilar Hellin, Carmen M. Martinez, Pilar Flores. Journal of Hazardous Materials 185 (2011) 634-638) and also several fungicides (Solarization and biosolarization enhance fungicide dissipation in the soil. José Fenoll, Encarnación Ruiz, Pilar Hellin, Simon Navarro, Pilar Flores. Chemosphere 79 (2010) 216- 220).

In relation to the above, the present patent application refers to a later stage of biosolarisation of the substrate of the beds (which has been described above as an object of protection) together with the manure that is removed from stalls, farms or stables. Essentially, it consists of accumulating said substrate in open air enclosures and placing a transparent plastic sheet to ensure that when solar radiation strikes there is a sharp increase in the temperature inside which causes a degradation of the active ingredients, preferably pyriproxyfen, so that the mixture of substrate and manure is perfectly usable for subsequent tasks of agricultural fertilisation without risk to crops or soil.

This recovery process can include the prior irrigation of the residue to be treated and, subsequently, the placement of a transparent plastic to provide adequate humidity, preferably between 40 and 60%, in order to achieve a conduction of the optimum temperature within the material. The type of plastic is preferably a low density polyethylene sheet with a thickness of 25 to 100 microns. This sheet is preferred as a covering material due to its price, resistance to tension and transparency to radiation.

This recovery process is applied in the present invention directly on the mixture of manure and absorbent substrate of interest for controlling insects for the purpose of stabilising the organic matter, eliminating pathogens and parasites, and finally degrading the pesticides that this residue contains. The increase in temperature and the abundant concentration of microorganisms accelerate degradation processes and their performance. In this way, the manure and substrate residue for controlling insects of the present invention can be transformed as a fertiliser or organic amendment, without causing public health problems and/or environmental contamination.

### BRIEF DESCRIPTION OF THE FIGURES

Figure 1: Scheme depicting the method of producing the substrate for controlling flies of the present invention, comprising wood shavings as an absorbent substrate, and the method further comprises producing the wood shavings from logs. This scheme is subdivided into two figures, Figure 1a and Figure 1b, the first showing specifically the part of the method that includes the surface cutting of the wood and subsequent drying of the shavings, as well as the subsequent purification, while the second illustrates the continuation of the process with impregnation of the formulation and subsequent treatment and packaging.
   Thus, in particularly preferred embodiments of the production method for producing the wood shavings impregnated with IGR described herein, the wood logs pass through a mill (1) where the surface cutting or shaving of the logs takes place in a controlled manner to obtain fine flakes (shavings) of wood in a controlled process; the wood shavings pass through the drying zone (2) and are then subjected to a purification process by sieving through a cyclone (3) and a sieve (4). The impregnation zone (5) is located at the outlet of the sieve (4), this zone comprises a tank with the formulation comprising IGR (6), systems for applying the formulation from the tank to the impregnation system, where the impregnation system can be by advancing on an inclined plane by means of a fluidized bed that moves the wood shavings by pneumatic action (5a), spraying the formulation comprising the IGR through diffuser nozzles (5b) or advancing and overturning the material by rotation of the cylinder and spraying the formulation comprising the ICR (5c). In any of the three options, the formulation comprising the IGR is supplied from a tank (6). Subsequently, the shavings impregnated with the formulation comprising at least one insect growth regulator are conveyed to a packaging area (7), where they are packaged in sacks of the desired size or are stored in bulk, and are distributed by trucks (8) or any other transportation system.

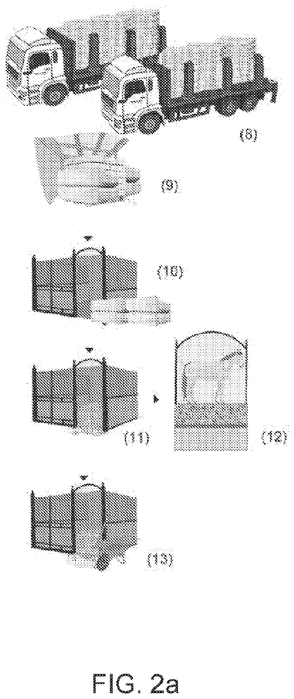

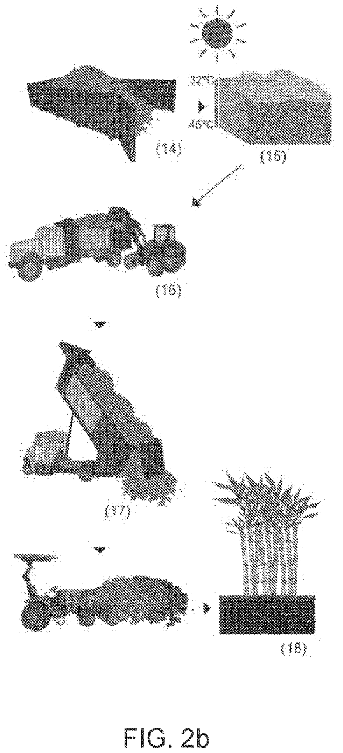

Figure 2: Scheme showing the use of the substrate for controlling flies as a horse bed, and the subsequent collection of the substrate with the excrements in the biosolarisation process to recover the animal beds. This scheme is subdivided into two figures, Figure 2a and Figure 2b. The first figure shows specifically the part of the process that includes its distribution and storage and its incorporation into the stable as an animal bed, that is, its use. Subsequently, the second figure illustrates how this bed, after its use, is extracted from the stable as residue for biosolarisation treatment.
   In particularly preferred embodiments of the present invention, the wood shavings impregnated with the IGR are distributed by trucks (8) or any other means of transport to a storage area (9) until their use. In one of their preferred applications, the wood shavings impregnated with IGR of the present invention are taken to a stable (10) and placed in a crib (11) as an animal bed for a horse (12). After a certain period of time, the crib (13) is cleaned and the residues formed by the excrements of the horse and the shavings removed from the crib are stored in a tank (14). Subsequently, this residue is subjected to a biosolarisation process (15) where both the IGR present in the shavings and microorganisms that may be present in the organic matter are removed. Finally, the treated residue is extracted from the biosolarisation deposit (16) and used as an organic fertiliser in an agricultural crop (17).
Figure 3: Graph showing the mortality results of *M*. *domestica* pupae with wood shavings impregnated with the formulations detailed in table 1 as described in test 1.
Figure 4: Graph showing the mortality results of M. *domestica* pupae with wood shavings impregnated with the pyriproxyfen formulations detailed in table 3 as described in test 2.
Figure 5: Graph showing the mortality results of *M. domestica* pupae with wood shavings impregnated with the pyriproxyfen formulations detailed in table 5 as described in test 3.
Figure 6: Graph showing the mortality results of *M. domestica* pupae with wood shavings impregnated with the pyriproxyfen formulations detailed in table 7 as described in test 4.
Figure 7: Graph showing the mortality results of *M. domestica* pupae with wood shavings impregnated with cyromazine formulations detailed in table 9 as described in test 5.

### EXAMPLES

First, four experiments are described aimed at quantitatively evaluating the efficacy of different preparations of pine wood shavings impregnated with IGRs on housefly (*Musca domestica,* L.) larvae and pupae. The first test was used to verify the efficacy of the obtained substrate and to select pyriproxyfen as an active ingredient (ICR), while the second test, performed, like the first one, on rabbit manure, allowed choosing a certain type of impregnation formulation and profiling the most suitable concentration and dose. The results of the second test were confirmed in the third test on horse manure. In the fourth and final test, it was used to define the optimum concentration of pyriproxyfen in the impregnation formulation (0.05% by weight with respect to the weight of the formulation) and the application dose (15 mg of pyriproxyfen per kilogram of wood shavings). The results obtained demonstrate the efficacy of the treatment for the tested products and doses, with pyriproxyfen being the most effective active even at very low doses.

Secondly, a test is described aimed at evaluating the efficacy of different preparations of pine wood shavings impregnated with cyromazine on housefly (Musca domestica, L.) larvae and pupae.

### Material and methods

The absorbent substrate used for the impregnation was "Great Northern" pine wood shavings, which are the most commonly used in horse beds.

For the efficacy studies, the application of the formulations for the impregnation of the shavings was performed manually by means of a container with a spray gun. Several sprays were carried out with intermediate turning of the shaving to ensure the homogeneity of the impregnation.

The organic material used was rabbit manure in the first two tests with pyriproxyfen, due to its greater availability and its high infestation by fly larvae. For tests 3 and 4 with pyriproxyfen and the test conducted with cyromazine, horse manure was used as it is the main object of application of the product. In both cases, manure with high infestation of fly larvae was selected to obtain a suitable number of larvae per test.

To carry out the efficacy tests, a mixture of shavings/manure was placed in a 30/70 ratio in different trays, adding 50 g of shavings per 117 g of manure without over mixing both materials which could facilitate the contact of the larvae with the treated shaving. The trays were covered with a mesh as a precaution against the emergence of an adult.

With the intention of reproducing storage conditions on a small scale, the shavings impregnated with IGR with manure in facilities with horses, the trays were kept in the open air in natural conditions, in which periods of shadow were alternated with periods of insolation.

In the case of the pyriproxyfen bed tests, after 5 days of exposure (enough time for the larvae to have passed to the pupal stage), the pupae were separated in plastic cups covered with a mesh and then there was a waif for the emergence of adults. Once adults emerged, unviable pupae and emerged adults (healthy and defective) were counted to calculate the percentage of mortality in each case.

In the case of the test with cyromazine, after 5 days of exposure, the pupae and the dead larvae were separated. Subsequently, once adults emerged, dead larvae and non-viable pupae and emerged adults (healthy and defective) were counted to calculate the percentage of mortality in each case.

An untreated shaving control was available in all the tests.

### Results

**Test 1.** Four different formulations were tested, under the conditions set forth in the following table (Table 1). For this, 4 formulations were prepared:

**Table 1. Formulations with pyriproxyfen and diflubenzuron on rabbit manure**

| **No.** | **IGR concentration (weight with respect to the total weight of the formulation)** | **Type of formulation** | **Dosage (weight formulation with respect to the weight of the shavings)** | **Load (mg of active ingredient/Kg shavings)** |
|---|---|---|---|---|
| **1** | 10% diflubenzuron | Concentrated suspension | 6% | 6000 |
| **2** | 1% pyriproxyfen | Concentrated suspension | 6% | 600 |
| **3** | 1% pyriproxyfen + 10% diflubenzuron | Concentrated suspension | 6% + 6% | 600 / 600 |
| **4** | 100% diflubenzuron | Technical product dusted | 0.6 % | 6000 |

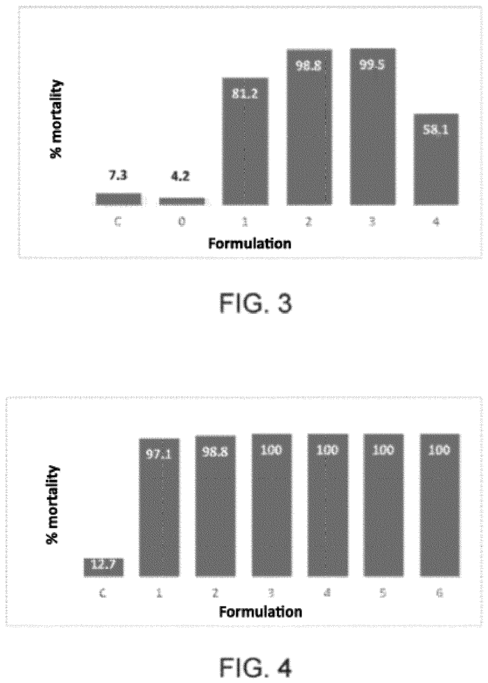

In addition, a control without wood shavings (C) and another with untreated wood shavings (1) were tested. The mortality results of *M. domestica* pupae with wood shavings impregnated with the formulations detailed in Table 1 obtained in this first test are shown in Table 2 and Figure 3.

**Table 2. Mortality results of M. domestica pupae in wood shavings with the formulations of Table 1**

| **No.** | **Total individuals** | **Adults** | **Pupae not emerged** | **% Mortality** |
|---|---|---|---|---|
| **C (control)** | 109 | 101 | 8 | 7.3 |
| **0** | 142 | 136 | 6 | 4.2 |
| **1** | 181 | 34 | 147 | 81.2 |
| **2** | 161 | 2 | 159 | 98.8 |
| **3** | 182 | 1 | 181 | 99.5 |
| **4** | 222 | 93 | 129 | 58.1 |

The results of this first test served to select pyriproxyfen as an active insect growth regulator (IGR) of the formulation, since the mortality results for diflubenzuron (formulations 1 and 4) are good, but not as good as those of the formulations containing pyriproxyfen (formulations 2 and 3).

It should be noted that the only non-liquid formulation (formulations 4) shows the worst mortality results, probably due to its lower capacity for dispersion and adherence to the substrate (wood shavings).

**Test 2.** Formulations with pyriproxyfen on rabbit manure

The formulations prepared for the impregnation were aqueous dispersions and emulsions with different concentrations of pyriproxyfen (Table 3):

**Table 3. Formulations with pyriproxyfen on rabbit manure**

| **No.** | **IGR concentration (weight with respect to the total weight of the formulation)** | **Type of formulation** | **Dosage (weight formulation with respect to the weight of the shavings)** | **Load (mg of active ingredient/Kg shavings)** |
|---|---|---|---|---|
| **1** | 0.5% pyriproxyfen | Aqueous dispersion | 6% | 300 |
| **2** | 0.1% pyriproxyfen | Aqueous dispersion | 6% | 150 |
| **3** | 1% pyriproxyfen | Aqueous dispersion | 6% | 600 |
| **4** | 0.2% pyriproxyfen | Aqueous dispersion | 6% | 150 |
| **5** | 0.5% pyriproxyfen EW | Aqueous emulsion | 6% | 300 |
| **6** | 0.2% pyriproxyfen EW | Aqueous emulsion | 6% | 150 |

Like in test 1, a control was carried out with manure without shavings (C). The mortality results on *M. domestica* pupae with wood shavings impregnated with the pyriproxyfen formulations described in table 3 in rabbit manure are shown in the following table (Table 4) and in Figure 4.

**Table 4. Mortality results of M. domestica pupae on wood shavings with the pyriproxyfen formulations of Table 2 in rabbit manure**

| **No.** | **Total individuals** | **Adults** | **Pupae not emerged** | **% Mortality** |
|---|---|---|---|---|
| **C (control)** | 71 | 62 | 9 | 12.7 |
| **1** | 35 | 1 | 34 | 97.1 |
| **2** | 85 | 1 | 84 | 98.8 |
| **3** | 42 | 0 | 42 | 100 |
| **4** | 132 | 0 | 132 | 100 |
| **5** | 112 | 0 | 112 | 100 |
| **6** | 71 | 0 | 71 | 100 |

The obtained results showed high efficacy for all the formulations used in the impregnation of wood shavings. The best results (100% mortality) were produced with formulations 3, 4, 5 and 6.

In view of these results, it was decided to repeat the experiment by impregnating wood shavings with the formulations having a lower concentration of pyriproxyfen and horse manure.

**Test 3.** Trays were prepared with wood shavings impregnated with 2 formulations with pyriproxyfen (see Table 5 below) and applied to horse manure.

Additionally, a tray was prepared with untreated wood shavings that served as a control group (C).

**Table 5. Formulations with pyriproxyfen on horse manure**

| **No.** | **Pyriproxyfen concentration (weight with respect to the total weight of the formulation)** | **Type of formulation** | **Dosage (weight formulation with respect to the weight of the shavings)** | **Load (mg of active ingredient/Kg shavings)** |
|---|---|---|---|---|
| **1** | 0.2% pyriproxyfen | Aqueous emulsion | 6% | 120 |
| **2** | 0.1% pyriproxyfen | Aqueous emulsion | 6% | 60 |

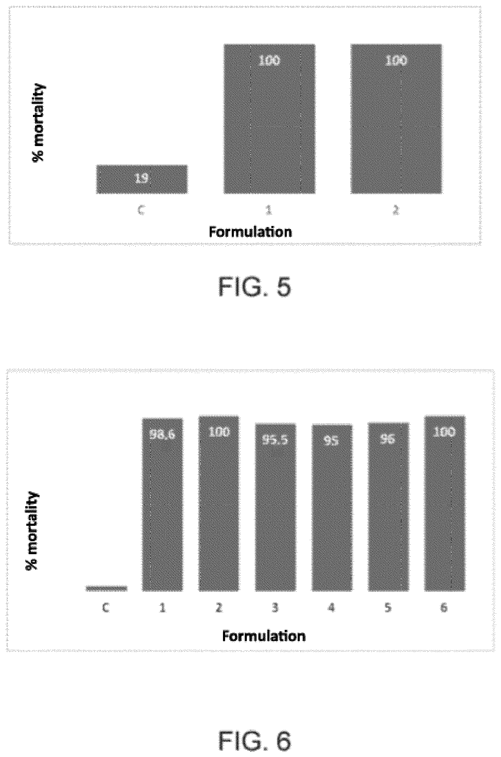

The mortality results on *M. domestica* pupae with wood shavings impregnated with pyriproxyfen formulations in horse manure are shown in the following table (Table 6) and Figure 5.

**Table 6. Mortality results of M. domestica pupae in wood shavings with the formulations of Table 5**

| **No.** | **Total individuals** | **Adults** | **Pupae not emerged** | **% Mortality** |
|---|---|---|---|---|
| **C (control)** | 53 | 43 | 10 | 19 |
| **1** | 93 | 0 | 93 | 100 |
| **2** | 41 | 0 | 41 | 100 |

Again, 100% mortality was obtained for the two substrates prepared with the two pyriproxyfen formulations, both 0.2% and 0.1% (Table 6).

**Test 4:** In view of the results, a final test was prepared for the purpose of evaluating the efficacy of the substrate impregnated with pyriproxyfen solutions at a lower concentration than those tested up until now (0.05% and 0.01%), applying them in several doses (3% and 6%), in order to optimize the concentration of the IGR and the application dose. To that end, substrate impregnated with the formulations specified in Table 7 was evaluated:

**Table 7. Formulations with pyriproxyfen on horse manure**

| **No.** | **Pyriproxyfen concentration (weight with respect to the total weight of the formulation)** | **Type of formulation** | **Dosage (weight formulation with respect to the weight of the shavings)** | **Load (mg of active ingredient/Kg shavings)** |
|---|---|---|---|---|
| **1** | 0.1% pyriproxyfen | Aqueous emulsion | 6% | 60 |
| **2** | 0.05% pyriproxyfen | Aqueous emulsion | 6% | 30 |
| **3** | 0.01% pyriproxyfen | Aqueous emulsion | 6% | 6 |
| **4** | 0.1% pyriproxyfen | Aqueous emulsion | 3% | 30 |
| **5** | 0.05% pyriproxyfen | Aqueous emulsion | 3% | 15 |
| **6** | 0.2% pyriproxyfen | Aqueous emulsion | 3% | 60 |

Formulation 5 of test 4 comprises, amounts expressed in percentage by weight with respect to the total weight of the composition:

| | |
|---|---|
| Pyriproxyfen: | 0.05% |
| vinyl copolymer: | 0.385% |
| additional additives: | 1.72 % (surfactants 0.02%, solvent 1.6%, preservative 0.1%) |
| water: | qs 100% |

The rest of the formulations tested in this study comprise, amounts expressed in percentage by weight with respect to the total weight of the composition:

| | |
|---|---|
| IGR: | as indicated in any one of tables 1, 3, 5 or 7 |
| vinyl copolymer: | 0-5% |
| additional additives: | 0.5-5 % |
| water: | qs 100% |

Additional additives are surfactants, solvents (other than water) and preservatives that provide stability to the formulation.

The mortality results on *M. domestica* pupae with wood shavings impregnated with the pyriproxyfen formulations described in Table 7, in horse manure are shown in Table 8 and Figure 6.

**Table 8. Mortality results of M. domestica pupae in wood shavings with the formulations of Table 7**

| **No.** | **Total individuals** | **Normal adults** | **Pupae not emerged** | **% Mortality** |
|---|---|---|---|---|
| **0** | 39 | 38 | 1 | 2.6 |
| **1** | 71 | 1 | 70 | 98.6 |
| **2** | 79 | 0 | 79 | 100 |
| **3** | 44 | 2 | 42 | 95.5 |
| **4** | 135 | 4 | 131 | 95 |
| **5** | 50 | 2 | 48 | 96 |
| **6** | 47 | 0 | 47 | 100 |

The results obtained corroborate good efficacy of pyriproxyfen as a pupicide at very low doses. Even with formulation no. 3, where the amount of pyriproxyfen per Kg of wood shavings is the lowest (6 mg / Kg), efficacy is very good (95.5%).

**Test 5.** Four different formulations were tested with cyromazine on horse manure (Table 9):

**Table 9. Formulations with cyromazine on horse manure**

| **No.** | **Composition** | **Type of formulation** | **Dosage (weight formulation with respect to the weight of the shavings)** | **Load (mg of active ingredient/Kg shavings)** |
|---|---|---|---|---|
| **1** | 1% cyromazine | Aqueous dispersion | 6% | 600 |
| **2** | 0.5% cyromazine | Aqueous dispersion | 3% | 150 |
| **3** | 0.5% cyromazine | Aqueous dispersion | 6% | 300 |
| **4** | 0.1% cyromazine | Aqueous dispersion | 6% | 60 |

In addition, a control formulation without wood shavings (C) and an untreated wood shaving control product (0) were tested.

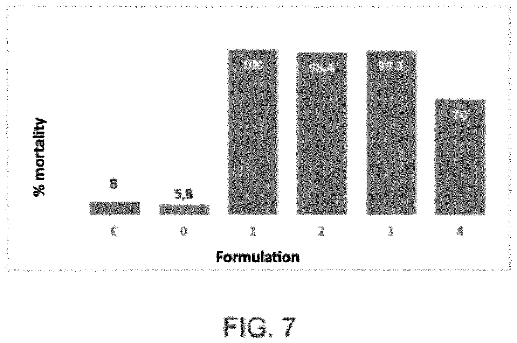

The mortality results of *M*. *domestica* pupae with wood shavings impregnated with the formulations detailed in Table 9 obtained in this test are shown in Table 10 and Figure 7.

**Table 10. Mortality results of M. domestica pupae in wood shavings impregnated with formulations of Table 9 with cyromazine in horse manure**

| **No.** | **Total individuals** | **Adults** | **Dead larvae** | **Pupae not emerged** | **% Mortality** |
|---|---|---|---|---|---|
| **C (control)** | 87 | 80 | 1 | 6 | 8 |
| **0** | 103 | 92 | 2 | 4 | 5.8 |
| **1** | 79 | 0 | 79 | 0 | 100 |
| **2** | 128 | 2 | 124 | 2 | 98.4 |
| **3** | 134 | 1 | 130 | 3 | 99.3 |
| **4** | 117 | 35 | 78 | 4 | 70 |

The results verified the efficacy of the shavings impregnated with cyromazine and, in addition, allowed selecting the ideal concentration of the formulation to be impregnated and the recommended application dose for same.

The wood shavings treated with formulation 1 were the most effective product (100% mortality) but formulations 2 and 3 also obtained a high mortality (98.4% and 99.3%, respectively) with a quarter and half the load, respectively, with respect to formulation 1. Therefore, its cost / efficacy ratio is much better.

The wood shavings impregnated with solution 4 obtained good efficacy results, but comparatively did not reach the high mortality percentages of the other formulations, which indicates that the active load per kilogram of shaving was too low in this case.

In short, this test allowed verifying the efficacy of the final product when the IGR agent is cyromazine, constituting a valid option for controlling house flies in animal beds object of the present invention. It also allowed selecting the concentration of the solution (0.5% cyromazine) and dose (150 mg/kg of wood shavings). Formulations with very low concentrations of active ingredient (cyromazine) and very low product doses are sufficient to exert adequate control of the immature stages of *M*. *domestica* in manure.

After the five tests carried out, several conclusions can be drawn:
- The substrate impregnated with IGRs has been shown as an effective tool for controlling flies in manure;
- The IGRs used (pyriproxyfen, diflubenzuron and cyromazine) have shown efficacy at low doses, with pyriproxyfen and cyromazine having the best mortality percentages;
- Substrates with loads of 15 mg/kg of pyriproxyfen and even 6 mg/kg, or 150 mg/kg of cyromazine have shown high efficacy in the control of housefly pupae.
- Other factors in addition to efficacy must be taken into account when choosing the right formulation for impregnation.

## Claims

1. A substrate for insect control, **characterised in that** it comprises an absorbent substrate impregnated with at least one insect growth regulator.

2. The substrate for controlling insects according to claim 1, wherein the insect growth regulator is selected from the group consisting of pyriproxyfen, methoprene, hydroprene, diflubenzuron, triflumuron, fenoxycarb, tebufenozide, methoxyfenozide, cyromazine and a combination of the foregoing.

3. The substrate for controlling insects according to claim 2, wherein the insect growth regulator is selected from pyriproxyfen and cyromazine.

4. The substrate for controlling insects according to any one of claims 1 to 3, wherein the concentration of the insect growth regulator on the absorbent substrate is between 1 mg/kg and 6000 mg/kg by weight of the insect growth regulator with respect to the weight of the absorbent substrate.

5. The substrate for controlling insects according to any one of claims 1 to 4, comprising an absorbent substrate impregnated with a formulation comprising:
- between 0.005 and 10% of at least one insect growth regulator;
- between 0 and 5% of at least one filmogenic substance;
- between 0 and 15% of at least one water-insoluble particulate mineral material;
- between 0 and 25% of an organic solvent;
- between 0.01 and 10% of at least one additive selected from the group consisting of emulsifier, thickener, pH regulating agent, antifoam, dispersant, preservative, fungicide and a combination of the foregoing; and
- necessary amount of water to complete 100% by weight of the formulation.

6. The substrate for controlling insects according to any one of claims 1 to 5, wherein the absorbent substrate is selected from the group consisting of wood shavings, straw, wood pellets, paper, hemp, flax, crushed cardboard and a combination of the foregoing.

7. A method for obtaining the substrate for insect control that is described in any one of claims 1 to 6, **characterised in that** the method comprises: applying on an absorbent substrate a formulation comprising, amounts expressed in percentage by weight with respect to the total weight of the formulation:
- between 0.005 and 10% of at least one insect growth regulator;
- between 0 and 5% of at least one filmogenic substance;
- between 0 and 15% of at least one water-insoluble particulate mineral material;
- between 0 and 25% of an organic solvent;
- between 0.01 and 10% of at least one additive selected from the group consisting of emulsifier, thickener, pH regulating agent, antifoam, dispersant, preservative, fungicide and a combination of the foregoing; and
- necessary amount of water to complete 100% by weight of the formulation.

8. The method according to claim 7, wherein the formulation is applied by means of impregnation by a technique selected from the group consisting of sprinkling, spraying, fogging and contacting a surface that is impregnated with the composition.

9. The method of any one of claims 7 or 8, wherein the substrate impregnated with the formulation comprising the insect growth regulator has a moisture content greater than 8%, and the method comprises an additional step of drying the impregnated absorbent substrate to a maximum moisture content value of 12% if this value is exceeded after impregnation.

10. The method according to any one of claims 7 to 9, wherein the insect growth regulator is selected from pyriproxyfen and cyromazine and the amount of formulation applied is between 2 and 10% by weight with respect to the final weight of the absorbent substrate.

11. The method according to any one of claims 7 to 10, wherein the formulation to be applied on the substrate is in concentrated form comprising the following components by weight of the total formulation:
- between 1 and 50% of at least one insect growth regulator (IGR);
- between 0 and 25% of at least one filmogenic substance;
- between 0 and 50% of at least one water-insoluble particulate mineral material;
- between 0 and 95% of an organic solvent;
- between 0.01 and 10% of at least one additive selected from the group consisting of emulsifier, thickener, pH regulating agent, antifoam, dispersant, preservative, fungicide and a combination of the foregoing, and
- water to complete 100% by weight of the formulation, where this amount may be equal to zero;
in such a way that said concentrated formulation is diluted in water before being applied on the substrate.

12. The method according to any one of claims 7 to 11, wherein the absorbent substrate is wood shavings, and the method comprises the production of these shavings.

13. Use of the substrate for insect control described in any one of claims 1 to 6 as animal beds.

14. Animal beds formed by the substrate for controlling flies and other insects described in any one of claims 1 to 6.

15. Use of the substrate for insect control described in any one of claims 1 to 6 for the preparation of an agricultural fertiliser.
